(19) Europäisches Patentamt

European Patent Office

Office européen des brevets

(11) Veröffentlichungsnummer: **0 374 295 B1**

(12) **EUROPÄISCHE PATENTSCHRIFT**

(45) Veröffentlichungstag der Patentschrift: **15.01.92**

(21) Anmeldenummer: **88121521.4**

(22) Anmeldetag: **22.12.88**

(51) Int. Cl.⁵: **G01D 3/02**, G01D 5/36

(54) **Verfahren und Vorrichtung zur langzeitkonstanten und störgrössenfreien Messsignalerfassung bei einem optisch abgetasteten Winkellagegeber.**

(43) Veröffentlichungstag der Anmeldung:
**27.06.90 Patentblatt 90/26**

(45) Bekanntmachung des Hinweises auf die
Patenterteilung:
**15.01.92 Patentblatt 92/03**

�essentialㅤBenannte Vertragsstaaten:
**CH DE ES FR GB IT LI SE**

(56) Entgegenhaltungen:
**EP-A- 0 127 476**
**EP-A- 0 232 625**

(73) Patentinhaber: **SIEMENS AKTIENGESELL-
SCHAFT**
**Wittelsbacherplatz 2**
**W-8000 München 2(DE)**

(72) Erfinder: **Cuylen, Michael**
**Kantstrasse 69**
**W-8502 Zirndorf(DE)**

EP 0 374 295 B1

EP 0 374 295 B1

**Beschreibung**

Die Erfindung betrifft ein Verfahren und eine Vorrichtung zur langzeitkonstanten, störgrößenfreien Erfassung der Meßsignale eines Winkellagegebers.

Derartige Winkellagegeber verfügen über eine möglichst kleine, rotierende Geberscheibe, auf deren Oberfläche sich in der Regel eine Vielzahl von Spuren mit bevorzugt winkellageabhängiger Reflexionsfähigkeit bzw. Lichtdurchlässigkeit befindet. Die Scheibe wird dabei bevorzugt von einer singulären Strahlungsquelle, insbesondere einer Lampe, möglichst gleichmäßig bestrahlt. Die Spuren werden zur absoluten bzw. inkrementellen Winkellagemessung bevorzugt im Auflicht- bzw. Durchlichtverfahren jeweils von mindestens einem Meßelement abgetastet. Als Meßelemente eignen sich bevorzugt Fotodioden.

Insbesondere zur Erhöhung der Meßgenauigkeit ist es bekannt, daß mehrere um einen bestimmten Winkel zueinander versetzte Meßelemente gleichzeitig eine Spur abtasten. So ist z.B. aus der DE-AS 15 48 744 eine Anordnung aus vier Meßelementen pro Spur bekannt, welche jeweils um 90° der Periode der winkellageabhängigen Reflexionsfähigkeit bzw. Lichtdurchlässigkeit der jeweiligen Spur voneinander versetzt angeordnet sind. Bei Winkellagegebern mit einer mehrspurigen Geberscheibe ist somit eine Vielzahl von Meßelementen vorhanden, deren Meßsignale jeweils möglichst störungsfrei erfaßt, übertragen und zur gewünschten hochgenauen Winkellageposition verknüpft werden müssen.

Zur Erzielung von auswertbaren Meßsignalen ist es zum einen notwendig, daß zumindest die eine Spur gemeinsam abtastenden Meßelemente untereinander abgeglichen werden, insbesondere zum Ausgleich von Bauelementestreuungen bei den verwendeten Meßelementen und den nachgeschalteten Verstärkungselementen. Desweiteren muß unter Umständen eine inhomogene Lichtverteilung auf der Geberscheibenoberfläche korrigiert werden. Diese kann durch die singuläre Strahlungsquelle und durch eine ungleichmäßige Lichtstreuung hervorgerufen werden.

Hierzu ist es zum einen bekannt, den Lichteinfall in jedes Meßelement z.B. mittels sogenannter Schattenschrauben getrennt einzustellen. In einer anderen Ausführungsform werden die Meßsignale der einzelnen Meßelemente mittels einstellbarer Widerstände separat abgeglichen. Aufgrund der großen Anzahl der in einem Winkellagegeber in der Regel vorhandenen Meßelemente ist der Raumbedarf und der Bauteileaufwand für derartige Abgleichvorrichtungen erheblich. So wird hierdurch die zunehmend gewünschte Verkleinerung der äußeren Abmessungen des Winkellagegebers stark beeinträchtigt. Ferner haben derartige Vorrichtungen den Nachteil, daß unter Umständen eine Nachjustierung zur Aufrechterhaltung gewünschter Anfangsbedingungen in gewissen Zeitabständen notwendig ist.

Zur Erzielung von langzeitkonstanten Meßsignalen müssen zudem sowohl vom optischen als auch elektrischen Teil des Winkellagegebers hervorgerufene, systembedingte und auf Alterungserscheinung bzw. Temperaturdrifteinflüssen beruhende Störungen korrigiert werden. Diese haben bevorzugt sogenannte Nullpunkts- und Verstärkungsfehler in den Meßsignalen zur Folge, welche grundsätzlich vorhanden bzw. allmählich zunehmend bzw. kurzzeitig schwankend sein können.

Auf der elektrischen Seite eines Winkellagegebers können derartige Fehler z.B. durch Verwendung von speziellen temperaturstabilen Bauelementen und den Einsatz von aufwendigen Kompensations- und Abgleichschaltungen vermieden werden.

Alterungen und Verschmutzungen der Geberscheibe, der zur Geberscheibenbestrahlung dienenden Strahlungsquelle und der zur Spurabtastung dienenden Meßelemente verursachen vom optischen Teil des Winkellagegebers herrührende Störungen in den Meßsignalen.

Zur Kompensation derartiger Fehler ist es z.B. aus der DE-OS 24 31 630 bekannt, auf der Geberscheibe eine zusätzliche, sogenannte Referenzspur vorzusehen, welche über eine winkellageunabhängige, konstante Reflexionsfähigkeit bzw. Lichtdurchlässigkeit verfügt. Das durch Abtastung dieser Spur gewonnene Signal wird dazu verwendet, um die Intensität der die Geberscheibe beleuchtenden Lichtquelle so zu erhöhen, daß trotz Alterung und Verschmutzung des optischen Geberteiles annähernd konstante Meßsignale von den Meßelementen bereitgestellt werden. Eine derartige Vorrichtung hat aber den Nachteil, daß die allmähliche Erhöhung des Stromes zur Speisung der selbst einer Alterung unterliegenden Lichtquelle eine zunehmende Reduzierung von deren Lebensdauer zur Folge hat. Zudem ist der Stellbereich einer derartigen Kompensation relativ klein. Die Vorrichtung hat den weiteren Nachteil, daß im Winkellagegeber eine Referenzspur und diese abtastende Meßelemente vorhanden sind, welche ausschließlich dem Zweck der Referenzbildung dienen und für die eigentliche Bestimmung der hochgenauen Winkellageposition nicht zur Verfügung stehen.

Schwierigkeiten bei der Bereitstellung von langzeitkonstanten und störgrößenfreien Meßsignalen ergeben sich in der Praxis häufig auch dadurch, daß der optische und der elektrische Teil eines Winkellagegebers räumlich voneinander entfernt angeordnet sind. Die von dem z.B. an einer Welle eines Roboterarmes angebrachten optischen Teiles eines Gebers bereitgestellten Meßsignale müssen über eine unter Umstän-

2

den unbestimmt lange und im Laufe der Zeit möglicherweise veränderliche Leitungsverbindung zum elektrischen Teil des Gebers übertragen werden. Dort erfolgt die eigentliche Bildung der hochgenauen Winkellageposition durch Auswertung der einzelnen Meßsignale. Derartige Leitungsverbindungen beeinträchtigen ebenfalls die Genauigkeit der Meßsignale insbesondere durch einen zum Teil unbekannten Leitungswiderstand und ein unter Umständen örtlich unterschiedliches Temperaturdriftverhalten.

Aus der DE-PS 33 13 559 ist es bei einer Anordnung zum Messen und/oder Überwachen der Temperaturen in Maschinen oder Geräten bekannt, Widerstandsthermometer über lange Leitungen mit einer gemeinsamen zentralen Meßeinrichtung zu verbinden. Hierbei wird zum einen der im Meßsignal enthaltene Widerstandswert der das Thermometer und die zentrale Meßeinrichtung verbindenden Leitung mittels eines sogenannten "Dreileitersystems" und einer nachgeschalteten Verstärkersubtraktionsschaltung eliminiert. Die von den zwischen dem Meßelement und der zentralen Meßeinrichtung angeordneten elektrischen Bauelementen hervorgerufenen, insbesondere temperaturdriftabhängigen Nullpunkts- und Verstärkungsabweichungen werden in der zentralen Meßeinrichtung selbst beseitigt. Hierzu werden kurzzeitig hintereinander die an einem Meßelement und an zwei zusätzlichen, außerhalb des temperaturüberwachten Gerätes befindlichen Referenzwiderständen abfallenden Meßspannungen erfaßt und in der zentralen Meßeinrichtung zueinander in Beziehung gesetzt. Eine derartige Anordnung hat den Nachteil, daß die von den Leitungsverbindungen und von den elektrischen Bauelementen herrührenden Störgrößen separat eliminiert werden. Zudem ermöglicht es die bekannte Anordnung nicht, von den Meßelementen selbst herrührende alterungs-und temperaturdriftbedingte Störungen zu beseitigen.

Der Erfindung liegt die Aufgabe zugrunde, bei einem Winkellagegeber auf möglichst einfache und selbsttätige Weise nahezu alle die Auswertbarkeit und Langzeitgenauigkeit beeinträchtigenden Störgrößen zu beseitigen. Diese werden vor allem hervorgerufen durch Bauelementestreuungen insbesondere der verwendeten Meßelemente, durch inhomogene Strahlungsverteilung bei der Geberscheibenbestrahlung, durch Leitungs- und Übergangswiderstände bei der Meßsignalübertragung, und durch Alterungserscheinungen bzw. Temperaturdrifteinflüsse im optischen und elektrischen Teil des Gebers und der Meßsignalübertragung.

Die Aufgabe wird gelöst durch die Merkmale von Anspruch 1 und Anspruch 3. Vorteilhafte weitere Ausführungsformen der Erfindung sind in den Unteransprüchen angegeben.

Die Erfindung hat den besonderen Vorteil, daß sie unabhängig ist von einem speziellen Aufbau des optischen Teiles des jeweiligen Winkellagegebers, insbesondere von einer konkreten Spurgestaltung auf der Geberscheibenoberfläche. So sind beispielsweise aus Platzgründen sehr häufig ausschließlich Spuren mit winkellageabhängiger Reflektionsfähigkeit bzw. Lichtdurchlässigkeit vorhanden. Aus den durch Abtastung dieser Spuren mittels geeigneter Meßelemente gewonnenen Meßsignalen wird in bekannter Weise durch geeignete Auswertung und Verknüpfung der Istwert der aktuellen Winkellageposition gebildet. Gemäß der Erfindung dient eines dieser Meßelemente als eine Referenz für alle übrigen Meßelemente im optischen Teil des Gebers. Das Meßsignal dieses Meßelementes trägt somit zum einen zur Bildung der hochgenauen Winkellageposition bei und dient gleichzeitig zur Bereitstellung einer Referenz für alle weiteren Meßelemente. Für die Referenzbildung ist es notwendig, daß dieses Meßsignal näherungsweise konstant und somit unabhängig von der aktuellen Winkelposition der Geberscheibe ist. Dies kann durch eine geeignete Glättung des Meßsignals erreicht werden.

In einer weiteren Ausführungsform ist es insbesondere bei mehrspurigen Geberscheiben vorteilhaft, wenn das, oder eines der Meßelemente als Referenz dient, welches eine Spur abtastet, deren Reflektionsfähigkeit bzw. Lichtdurchlässigkeit bei Drehung der Geberscheibe um einen bestimmten Winkelbereich im Vergleich zu den übrigen Spuren im Mittel am stärksten näherungsweise winkellageunabhängig erscheint. Spuren mit dieser Eigenschaft sind insbesondere sogenannte Inkrementalspuren, welche über bevorzugt flächengleiche Bereiche mit abwechselnd hoher und niedriger Reflektionsfähigkeit bzw. Lichtdurchlässigkeit verfügen. Aus dieser Gruppe von Spuren sind wiederum solche besonders geeignet, welche pro Winkelbereich eine möglichst hohe Anzahl derartiger Flächenbereiche mit abwechselnd hoher und niedriger Reflektionsfähigkeit bzw. Lichtdurchlässigkeit aufweisen.

Falls in einer anderen Ausführungsform es die maximal zulässigen äußeren Abmessungen des Winkellagegebers und damit der Geberscheibe erlauben, kann eine zusätzliche Referenzspur mit winkellageunabhängiger Reflektionsfähigkeit bzw. Lichtdurchlässigkeit auch auf der Geberscheibenoberfläche vorgesehen werden. In einem solchen Fall dient das diese Spur abtastende Meßelement in besonders einfacher Weise unmittelbar und ausschließlich als Referenz für alle übrigen zur Detektion der aktuellen Winkellagepostion dienenden Meßelemente des Gebers.

Gemäß der Erfindung wird ein langzeitstabiles und störungsfreies Meßsignal MSn* für eines der die Geberscheibe abtastenden Meßelemente MEn dadurch gebildet, daß das Meßsignal MSn vom jeweiligen Meßelement, das Meßsignal MSR von dem als Referenz dienenden Meßelement und das Meßsignal MSB von dem gemeinsamen Verbindungspunkt aller Meßelemente im Geber kurzzeitig hintereinander abgetastet und mittels der Gleichung

$$MSn^* = K1n \cdot \frac{MSn - MSB}{MSR - MSB} - K2n \quad (1)$$

miteinander in Beziehung gesetzt werden. Dabei repräsentieren die Faktoren K1n bzw. K2n zum jeweiligen Meßelement MEn gehörige Verstärkungs- bzw. Nullpunktsnormierungsfaktoren. Diese werden inbesondere bei der Erstinbetriebnahme des Gebers für jedes der Meßelemente separat bestimmt und desweiteren konstant gehalten. Mit ihrer Hilfe kann ein Abgleich aller Meßsignale untereinander insbesondere derart vorgenommen werden, daß die Meßsignale über den gleichen Signalbereich verfügen.

Die auf diese Weise erzielten einheitlichen Anfangsbedingungen für die Meßsignale aller Meßelemente im Geber bleiben erfahrungsgemäß nur über eine unter Umständen sehr kurze Zeit erhalten. Ursache hierfür sind die bereits oben beschriebenen und auf die Meßsignale einwirkenden Störungen. Diese werden nahezu von allen zur Meßsignalerfassung, -übertragung und -auswertung dienenden Elemente hervorgerufen. Gemäß der Erfindung werden nahezu alle derartigen Störungen dadurch kompensiert, daß das zu einem jeden Meßelement gehörende Meßsignal MSn mittels der oben angegebenen Beziehung (1) zu einem langzeitstabilen, störungsfreien und normierten Meßsignal MSn* umgewandelt wird. Die additiv und multiplikativ einwirkenden Störgrößen werden dabei durch geeignete Subtraktion bzw. Quotientenbildung ausgeglichen. Dies wird desweiteren im Detail erläutert.

Auf Grund der Erfassung des Meßsignals MSB am gemeinsamen Verbindungspunkt aller Meßelemente im Geber ist es auf besonders vorteilhafte Weise möglich, den Wert des in jedem der Meßsignale MSn und MSR enthaltenen, insbesondere temperaturdriftabhängigen Nullpunktsfehlers NPF zu ermitteln. In diesem Wert sind alle potential- und bauelementebedingten Nullpunktsabweichungen aller an der Meßsignalerfassung, -übertragung und -auswertung beteiligten Elemente des Winkellagegebers enthalten. Es gelten somit die Beziehungen:

$$MSn = MSn' + NPF$$
$$MSR = MSR' + NPF \quad (2)$$
$$MSB = NPF .$$

Durch Subtraktion des Meßsignales MSB am gemeinsamen Verbindungspunkt aller Meßelemente von dem Meßsignal MSn des jeweiligen Meßelementes (MSn - MSB) und von dem Meßsignal MSR des als Referenz dienenden Meßelementes (MSR - MSB) sind somit jegliche Nullpunktsfehlereinflüsse kompensierbar.

Die auf diese Weise entstehenden nullpunktsfehlerfreien Meßsignale MSn' und MSR' sind aber desweiteren mit einer Vielzahl von multiplikativ einwirkenden Verstärkungsfehlern behaftet.

So beeinträchtigen z.B. von Alterungen und Verschmutzungen im optischen Geberteil, d.h. insbesondere der Strahlungsquelle, der Geberscheibe und der die Geberscheibe abtastenden Meßelemente herrührende Verstärkungsfehler die Langzeitstabilität der Meßsignale. Derartige Einflußgrößen sollen desweiteren mit D1 gekennzeichnet werden. Desweiteren verursachen insbesondere Alterungen und Temperaturdrifteinflüsse der zur Meßsignalerfassung, -übertragung und -auswertung dienenden Elemente insbesondere im elektrischen Teil des Winkellagegebers ebenfalls Verstärkungsfehler. In diesem Wert sind insbesondere auch alle durch Leitungslängenänderungen bzw. Leitungstemperaturverläufe verursachten Verstärkungsfehler enthalten. Die letztgenannten Einflußgrößen sollen desweiteren mit D2 gekennzeichnet werden. Die nullpunktsfehlerfreien Meßsignale MSn' und MSR' und das den Nullpunktsfehler NPF selbst repräsentierende Meßsignal MSB am Verbindungspunkt aller Meßelemente lassen sich somit mittels folgender Beziehungen beschreiben:

$$MSn' = D1 \cdot D2 \cdot MSn^+$$
$$MSR' = D1 \cdot D2 \cdot MSR^+ \quad (3)$$
$$MSB = NPF = D2 \cdot NPF' .$$

Dabei repräsentieren die Größen MSn⁺ und MSR⁺ die idealen, nullpunkts- und verstärkungsfehlerfreien Meßsignale am jeweiligen Meßelement MEn und an dem als Referenz dienenden Meßelement MER. Desweiteren bedeutet der Faktor NPF' das verstärkungsfehlerfreie, reine Nullpunktsfehlersignal. Durch Einsetzen der Beziehungen (2) und (3) in die Gleichung (1) ergibt sich

$$MSn^* = K1n \cdot \frac{D2 \cdot (D1 \cdot MSn^+ + NPF') - D2 \cdot NPF'}{D2 \cdot (D1 \cdot MSR^+ + NPF') - D2 \cdot NPF'} - K2n \qquad (4)$$

Durch geeignete Zusammenfassung in Gleichung (4) erhält man schließlich

$$MSn^* = K1n \cdot \frac{MSn^+}{MSR^+} - K2n \qquad\qquad (5).$$

Man erkennt, daß sich das zu einem der Meßelemente MEn gehörige langzeitstabile Meßsignal $MSn^*$ gemäß der Erfindung im wesentlichen aus dem auf das verstärkungs- und nullpunktsfehlerfreie Meßsignal $MSR^+$ des als Referenz dienenden Meßelementes bezogenen verstärkungs- und nullpunktsfehlerfreien Meßsignal $MSn^+$ des jeweiligen Meßelementes ergibt. Die auf diese Weise gebildeten Meßsignale $MSn^+$ der die Geberscheibe abtastenden Meßelemente sind somit absolut langzeitstabil und störungsfrei. Sie lassen sich besonders vorteilhaft zu einem hochgenauen Winkellage-Istwert verarbeiten.

Die Erfindung wird desweiteren anhand der nachfolgend kurz angeführten Figuren näher erläutert. Dabei zeigen

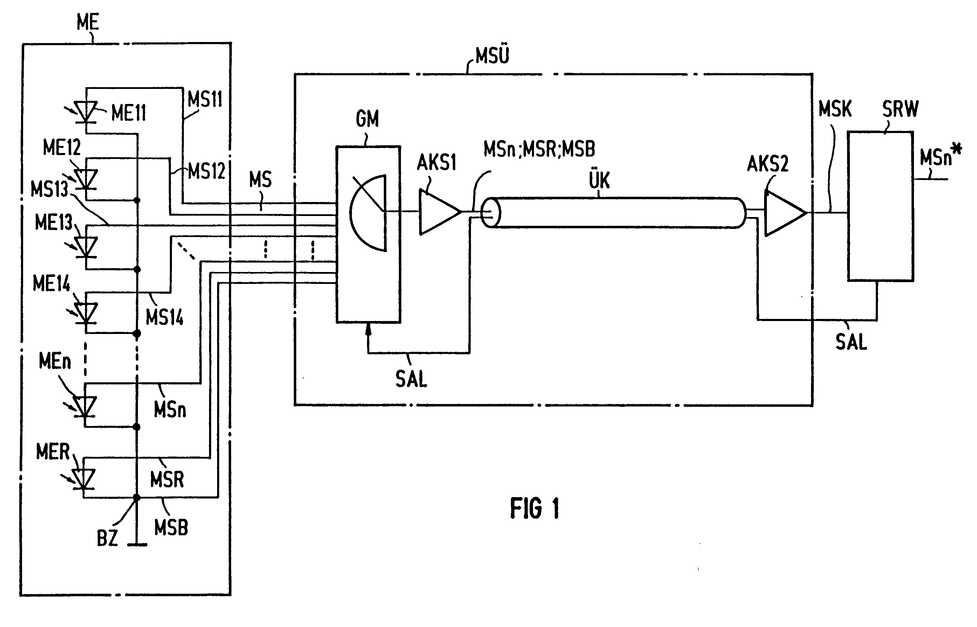

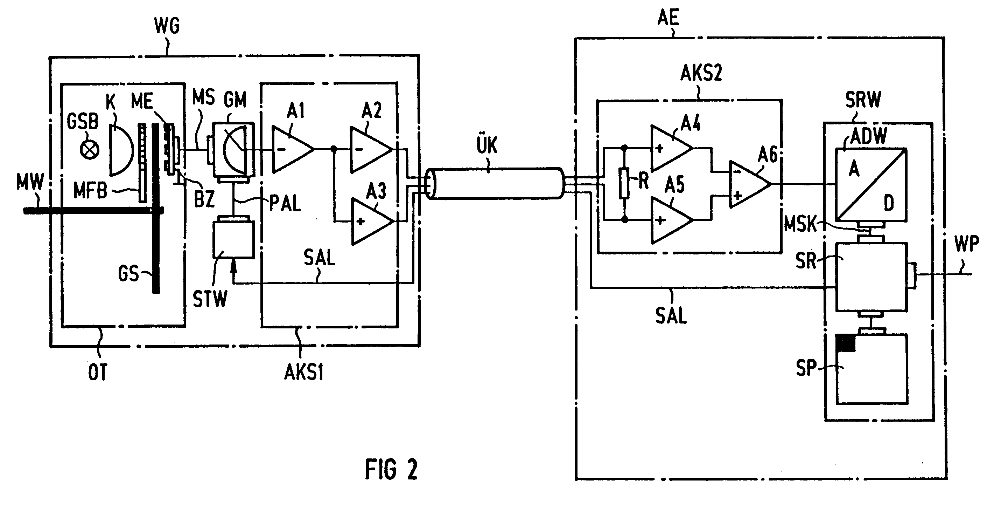

FIG 1 und 2 jeweils eine vorteilhafte Ausführungsform einer Vorrichtung zur störungsfreien Meßsignalerfassung bei einem Winkellagegeber gemäß der Erfindung.

In der FIG 1 sind in der Meßelementeanordnung ME zur Abtastung der Spuren auf der Geberscheibenoberfläche im optischen Teil des Winkellagegebers beispielhaft die Meßelemente ME11 bis ME14, MEn und MER dargestellt. Die Meßelemente ME11, ME12, ME13 und ME14 können dabei gleichzeitig eine einzige Spur abtasten und Meßsignale MS11 bis MS14 bereitstellen, welche beispielsweise um 90° einer Periode der winkellageabhängigen Reflektionsfähigkeit bzw. Lichtdurchlässigkeit der jeweiligen Spur untereinander phasenversetzt sind. Ferner ist anstelle von unter Umständen in einer sehr großen Anzahl vorhandenen weiteren Meßelementen zur Abtastung weiterer Spuren ein allgemeines Meßelement MEn mit dem dazu gehörigen Meßsignal MSn symbolisch dargestellt. Schließlich dient das Meßelement MER mit dem dazugehörigen Meßsignal MSR als eine Referenz für alle Meßelemente ME11 bis MEn. Wie bereits oben ausgeführt, kann dieses Meßelement MER in einer Ausführungsform ausschließlich zur Referenzbildung dienen, indem es beispielsweise eine zusätzliche Referenzspur auf der Geberscheibenoberfläche mit winkellageunabhängiger Reflektionsfähigkeit bzw. Lichtdurchlässigkeit abtastet. In einer anderen Ausführungsform kann dieses Meßelement MER zusätzlich zur Referenzbildung in der gleichen Weise wie alle übrigen Meßelemente ME11 bis MEn ein zur Bildung der hochgenauen Winkelposition dienendes Meßsignal beisteuern.

Die Meßelemente MEn sind in FIG 1 beispielhaft als Fotodioden ausgeführt und mit einem ihrer Anschlußpunkte gemeinsam am Verbindungspunkt BZ angeschlossen. In der in der FIG 1 dargestellten Ausführungsform liegt an diesem gemeinsamen Verbindungspunkt BZ aller Meßelemente gleichzeitig das Massebezugspotential an.

Erfindungsgemäß werden die von der Meßelementeanordnung ME bereitgestellten Meßsignale MS11...MSn, MSR gemeinsam mit dem am gemeinsamen Verbindungspunkt BZ aller Meßelemente abgegriffenen Meßsignal MSB als Meßsignale MS am Ausgang des optischen Teiles des Winkellagegebers zur Verfügung gestellt. Diese Signale werden von einer Meßsignalerfassung und -Übertragungsvorrichtung MSÜ erfaßt und einem Speicher-, Steuer- und Rechenwerk SRW zugeführt. In der in der FIG 1 dargestellten Ausführungsform dient das Speicher-, Steuer- und Rechenwerk SRW dazu, das an dessen Eingang zugeführte störgrößenbehafteten Meßsignal MSK gemäß der Erfindung in ein langzeitstabiles, störgrößenfreies und normiertes Meßsignal $MSn^*$ umzuwandeln. Die Meßsignalerfassungs- und -übertragungsvorrichtung MSÜ besteht aus einem gesteuerten Multiplexer GM, welcher die Meßsignale MSn der die Geberscheibe abtastenden Meßelemente, das Meßsignal MSR des als Referenz dienenden Meßelementes und das am gemeinsamen Verbindungspunkt BZ aller Meßelemente abgegriffene Meßsignal MSB kurzzeitig hintereinander erfaßt und in eine gemeinsame Signalübertragungsvorrichtung zur Signalweiterleitung einspeist.

Diese serielle Signalübertragungsvorrichtung besteht bevorzugt aus einem Übertragungskabel ÜK mit unbekannter bzw. variabler Leitungslänge, welches bevorzugt am Ein- und Ausgang mit signalformenden und verstärkenden Ankoppelschaltungen AKS1 und AKS2 abgeschlossen ist. Der Multiplexer GM wird über eine bevorzugt serielle Adreßsteuerleitung SAL vom Speicher-, Steuer- und Rechenwerk SRW derart angesteuert, daß aus den Meßsignalen MS am Ausgang der Meßelementeanordnung ME das jeweils gewünschte Meßsignal MSn eines der Meßelemente, oder das Meßsignal MSR des als Referenz dienenden Meßelementes oder das Meßsignal MSB am gemeinsamen Verbindungspunkt der Meßelemente in das Übertragungskabel ÜK eingespeist wird.

Bei der in der FIG 2 dargestellten weiteren vorteilhaften Ausführungsform einer Vorrichtung zur Meßsignalerfassung gemäß der Erfindung enthält der Winkellagegeber WG insbesondere einen optischen Teil OT, den gesteuerten Multiplexer GM zur sukzessiven Abtastung der Meßsignale MS am Ausgang des optischen Teiles OT und die erste Ankoppelschaltung AKS1 zur Meßsignalformung und -verstärkung. Der Geber ist mittels eines Übertragungskabels ÜK mit unter Umständen unbekannter und variabler Leitungslänge mit einer bevorzugt zentral angeordneten Auswerteeinheit AE verbunden. Diese stellt am Ausgang den aktuellen Winkellage-Istwert WP zur Verfügung, indem die Meßsignale MSn der die Geberscheibe abtastenden Meßelemente in langzeitstabile, störungsfreie und normierte Meßsignale MSn* übergeführt und anschließend in geeigneter Weise miteinander in Beziehung gesetzt werden.

Der optische Teil OT des Winkellagegebers besteht im wesentlichen aus einer nach außen geführten Meßwelle MW und der damit fest verbundenen rotierenden Geberscheibe GS. Diese wird in der Regel von einer singulären Strahlungsquelle GSB bestrahlt, welche in der FIG 2 beispielhaft als eine Lampe dargestellt ist. Die Spuren auf der Oberfläche der auf diese Weise bestrahlten Geberscheibe GS werden bevorzugt im Auflicht- bzw. Durchlichtverfahren von der Meßelementeanordnung ME abgetastet. Zur Vergleichmäßigung der Lichtverteilung auf der Geberscheibenoberfläche ist es vorteilhaft, z.B. einen Kondensor K zur Lichtstreuung vorzusehen. Desweiteren ist häufig zur besseren Konzentration der Strahlung auf die Spuren eine Meßfensterblende MFB feststehend zwischen der Strahlungsquelle GSB und der Geberscheibe GS angeordnet.

Die Meßsignale MS am Ausgang des optischen Teiles OT werden in der bereits beschriebenen Weise vom gesteuerten Multiplexer GM kurzzeitig hintereinander abgetastet und über die erste Ankoppelschaltung AKS1 sukzessiv in das Übertragungskabel ÜK am Ausgang des Winkellagegebers WG eingespeist. Ein zusätzliches Steuerwerk STW setzt dabei die von der Adreßleitung SAL seriell bereitgestellte Multiplexer-Kanaladresse in eine Adreßinformation um, welche dem Multiplexer GM über die parallele Adreßleitung PAL direkt zugeführt wird.

Die erste Ankoppelschaltung AKS besteht gemäß der in der FIG 2 dargestellten Ausführungsform vorteilhaft aus einem Vorverstärker A1 und zwei nachgeschalteten Leitungsverstärkern A2, A3, welche das jeweils zu übertragende Meßsignal in Form eines Differenzsignals in das Übertragungskabel ÜK einspeisen.

Die Auswerteeinheit AE enthält bevorzugt eine zweite Ankoppelschaltung AKS2 und ein Speicher-, Steuer- und Rechenwerk SRW. Die zweite Ankoppelschaltung enthält bevorzugt einen das Übertragungskabel ÜK elektrisch abschließenden Abschlußwiderstand R, zwei nachgeschaltete Vorverstärker A4, A5 und einen Differenzverstärker A6 zur hochohmigen Rückgewinnung des jeweils übertragenen Signals. Dieses Signal wird dem Speicher-, Steuer-und Rechenwerk zur weiteren Verarbeitung übergeben.

In der bevorzugten Ausführungsform von FIG 2 besteht das Speicher-, Steuer- und Rechenwerk SRW aus einem Analog-Digitalwandler ADW, einer Speichereinheit SP und einem mit diesen beiden Elementen verbundenen Steuer- und Rechenwerk SR. Die störgrößenbehafteten Meßsignale MSK werden in digitalkodierter Form vom Analog-Digitalwandler ADW dem Speicher- und Rechenwerk SR zur weiteren Verarbeitung übergeben. Dort werden aus den störgrößenbehafteten Meßsignalen MSK die langzeitstabilen, störungsfreien und normierten Meßsignale MSn* gebildet und diese anschließend zu dem gewünschten, hochgenauen Istwert der aktuellen Winkellageposition WP der Meßwelle MW des Winkellagegebers WG verarbeitet.

Die Erfindung hat den besonderen Vorteil, daß alle auf dem Weg zwischen der Meßelementeanordnung ME im optischen Teil OT und dem Übergabepunkt der erfaßten Meßsignale an der Verbindung zwischen dem Analog-Digitalwandler ADW und dem Speicher- und Rechenwerk SR auf die Meßelemente MS einwirkenden Störungen auf einfache Weise eliminiert werden können. Insbesondere ist es für die erfindungsgemäße Fehlerkompensation unerheblich, von welcher Art und wieviele meßsignalerfassenden, verstärkenden und übertragenden Elementen auf dem Weg zwischen der Meßelementanordnung und dem Übergabepunkt der Meßsignale MSK zum Steuer-und Rechenwerk SR angeordnet sind. Desweiteren ermöglicht die Erfindung auf besonders vorteilhafte Weise im optischen Teil OT des Gebers insbesondere von der Strahlungsquelle GSB, der Lichtstreuvorrichtung, der Geberscheibe GS bzw. den Meßelementen der Meßelementeanordnung ME hervorgerufene Störungen zu kompensieren.

**Patentansprüche**

1. Verfahren zur langzeitkonstanten, störgrößenfreien Erfassung der Meßsignale eines Winkellagegebers mit einer von mindestens einer Strahlungsquelle bestrahlten und im Auflicht- bzw. Durchlichtverfahren optisch abgetasteten, rotierenden Geberscheibe, wobei

a) die Geberscheibe über mindestens eine von mindestens einem Meßelement (MEn), insbesondere einer Fotodiode, abgetastete Spur verfügt,

b) mindestens ein Meßelement (MER) zur Abtastung einer Spur mit insbesondere im Mittel näherungsweise winkellageunabhängiger Reflexionsfähigkeit bzw. Lichtdurchlässigkeit zudem als eine Referenz dient,

c) die Meßsignale (MSn,MSR,MSB) an dem mindestens einen Meßelement (MEn), an dem als Referenz dienenden Meßelement (MER) und an einem gemeinsamen Verbindungspunkt (BZ) aller Meßelemente kurzzeitig hintereinander erfaßt werden, und

d) hieraus mittels der Beziehung

$$MSn^* = K1n \cdot \frac{MSn - MSB}{MSR - MSB} - K2n$$

ein langzeitstabiles, störungsfreies und normiertes Meßsignal MSn* gebildet wird, wobei

MSn = das Meßsignal an einem Meßelement,
MSR = das bevorzugt geglättete Meßsignal an dem als Referenz dienenden Meßelement,
MSB = das Meßsignal am gemeinsamen Verbindungspunkt aller Meßelemente,
K1n = ein Verstärkungsnormierungsfaktor für das jeweilige Meßelement, und
K2n = ein Nullpunktsnormierungsfaktor für das jeweilige Meßelement

ist.

2. Verfahren nach Anspruch 1, **dadurch gekennzeichnet,** daß die von dem als Referenz dienenden Meßelement (MER) abgetastete Spur eine zusätzliche Referenzspur mit winkellagenunabhängiger Reflexionsfähigkeit bzw. Lichtdurchlässigkeit ist.

3. Vorrichtung zur langzeitkonstanten, störgrößenfreien Erfassung der Meßsignale eines Winkellagegebers mit einer von mindestens einer Strahlungsquelle bestrahlten und im Auflicht- bzw. Durchlichtverfahren optisch abgetasteten, rotierenden Geberscheibe, wobei

a) die Geberscheibe über mindestens eine von mindestens einem Meßelement (MEn), insbesondere einer Fotodiode, abgetasteten Spur verfügt,

b) mindestens ein Meßelement (MER) zur Abtastung einer Spur mit insbesondere im Mittel näherungsweise winkellageunabhängiger Reflexionsfähigkeit bzw. Lichtdurchlässigkeit zudem als eine Referenz dient,

c) ein Multiplexer (GM) die Meßsignale (MSn,MSR,MSB) an dem mindestens einen Meßelement (MEn), an dem als Referenz dienenden Meßelement (MER) und an einem gemeinsamen Verbindungspunkt (BZ) aller Meßelemente kurzzeitig hintereinander erfaßt,

d) eine Signalübertragungsvorrichtung (AKS1, ÜK, AKS2), insbesondere aus einem Übertragungskabel (ÜK) mit signalverstärkenden Elementen (AKS1, AKS2) am Ein-und Ausgang, mit dem Multiplexer (GM) verbunden ist, und

e) ein Speicher-, Steuer- und Rechenwerk (SRW) ein langzeitstabiles, störungsfreies und normiertes Meßsignal MSn* mittels der Beziehung

$$MSn^* = K1n \cdot \frac{MSn - MSB}{MSR - MSB} - K2n$$

bildet, wobei

MSn = das Meßsignal an einem Meßelement,
MSR = das bevorzugt geglättete Meßsignal an dem als Referenz dienenden Meßelement,
MSB = das Meßsignal am gemeinsamen Verbindungspunkt aller Meßelemente

K1 = ein Verstärkungsnormierungsfaktor für das jeweilige Meßelement, und

K2 = ein Nullpunktsnormierungsfaktor für das jeweilige Meßelement

ist.

4. Vorrichtung nach Anspruch 3, **dadurch gekennzeichnet,** daß die von dem als Referenz dienenden Meßelement (MER) abgetastete Spur eine zusätzliche Referenzspur mit winkellagenunabhängiger Reflexionsfähigkeit bzw. Lichtdurchlässigkeit ist.

5. Vorrichtung nach Anspruch 3 oder 4, **dadurch gekennzeichnet,** daß das Speicher-, Steuer- und Rechenwerk (SRW) einen aktuellen Winkellageistwert (WP) aus den langzeitstabilen, störungsfreien Meßsignalen (MSn*) bildet (FIG 2).

**Claims**

1. Method for the long-term constant, disturbance-free detection of the measuring signals of an angular position sensor having a rotating sensor disc exposed to radiation from at least one radiation source and optically scanned using the front illumination or rear illumination method, with:

a) the sensor disc having available to it at least one track scanned by at least one measuring element (MEn), in particular a photodiode;

b) at least one measuring element (MER), for the scanning of a track having, in particular on average, reflective capacity or light transmitting capacity which is approximately independent of angular position, this measuring element (MER) also serving as a reference;

c) the measuring signals (MSn, MSR, MSB) being detected successively and momentarily at the measuring element (MEn), of which there is at least one, at the measuring element (MER) serving as a reference and at a common connection point (BZ) of all the measuring elements; and

d) a long-term stable, disturbance-free and normalised measuring signal $MSn^*$ being formed from this by means of the relationship:

$$MSn^* = K1n \cdot \frac{MSn - MSB}{MSR - MSB} - K2n$$

in which:

MSn = the measuring signal at a measuring element;

MSR = the preferably smoothed measuring signal at the measuring element serving as a reference;

MSB = the measuring signal at the common connection point of all the measuring elements;

K1n = a gain normalisation factor for the respective measuring element; and

K2n = a zero normalisation factor for the respective measuring element.

2. Method according to claim 1, **characterised in that** the track scanned by the measuring element (MER) serving as a reference is an additional reference track having reflective capacity or light transmitting capacity which is independent of angular position.

3. Device for the long-term constant, disturbance-free detection of the measuring signals of an angular position sensor having a rotating sensor disc exposed to radiation from at least one radiation source and optically scanned using the front illumination or rear illumination method, with

a) the sensor disc having available to it at least one track scanned by at least one measuring element (MEn), in particular a photodiode;

b) at least one measuring element (MER), for the scanning of a track having, in particular on average, reflective capacity or light transmitting capacity which is approximately independent of angular position, this measuring element (MER) also serving as a reference;

c) a multiplexer (GM) successively and momentarily detecting the measuring signals (MSn, MSR, MSB) at the measuring element (MEn), of which there is at least one, at the measuring element (MER) serving as a reference and at a common connection point (BZ) of all the measuring elements;

d) a signal transmission device (AKS1, ÜK, AKS2), in particular consisting of a transmission cable (ÜK) having signal-amplifying elements (AKS1, AKS2) at the input and output, being connected to the multiplexer (GM); and

8

e) a storage, control and computer unit (SRW) forming a long-term stable, disturbance-free and normalised measuring signal MSn$^*$ by means of the relationship:

$$MSn^* = K1n \cdot \frac{MSn - MSB}{MSR - MSB} - K2n$$

in which:

MSn = the measuring signal at a measuring element,

MSR = the preferably smoothed measuring signal at the measuring element serving as a reference,

MSB = the measuring signal at the common connection point of all the measuring elements,

K1 = a gain normalisation factor for the respective measuring element, and

K2 = a zero normalisation factor for the respective measuring element.

4. Device according to claim 3, **characterised in that** the track scanned by the measuring element (MER) serving as a reference is an additional reference track having reflective capacity or light transmitting capacity which is independent of angular position.

5. Device according to claim 3 or 4, **characterised in that** the storage, control and computer unit (SRW) forms a current angular position actual value (WP) from the long-term stable, disturbance-free measuring signals (MSn*) (Figure 2).

**Revendications**

1. Procédé pour détecter, d'une manière constante pendant une longue durée et sans grandeur parasite, des signaux de mesure d'un capteur de position angulaire, qui comporte un disque rotatif irradié par au moins une source de rayonnement et explorée optiquement selon le procédé par réflexion ou le procédé par transmission, et selon lequel

a) le disque du capteur possède au moins une piste explorée par au moins un élément de mesure (MEn), notamment une photodiode,

b) au moins un élément de mesure (MER) servant à explorer une piste possédant une capacité de réflexion ou de transmission de la lumière qui, notamment, est en moyenne approximativement indépendante de la position angulaire, est en outre utilisé en tant que référence,

c) les signaux de mesure (MSn,MSR,MSB) sont détectés successivement en un bref intervalle de temps au niveau d'au moins un élément de mesure (MEn), au niveau de l'élément de mesure (MER) utilisé comme référence, et au niveau d'un point commun de liaison (BZ) de tous les éléments de mesure, et

d) un signal de mesure MSn$^*$ normalisé, stable sur une longue durée et non parasité, est formé, à partir de là, conformément à la relation

$$MSn^* = K1n \cdot \frac{MSn - MSB}{MSR - MSB} - K2n$$

avec

MSn = signal de mesure dans un élément de mesure

MSR = signal de mesure de préférence lissé présent au niveau d'un élément de mesure utilisé comme référence,

MSB = signal de mesure présent au niveau du point commun de liaison de tous les éléments de mesure,

K1n = facteur de normalisation de l'amplification pour l'élément de mesure respectif, et

K2n = facteur de normalisation du point zéro pour l'élément de mesure respectif.

2. Procédé selon la revendication 1, caractérisé en ce que la piste explorée par l'élément de mesure (MER) utilisé comme référence est une piste supplémentaire de référence possédant une capacité de réflexion ou de transmission de la lumière indépendante de la position angulaire.

**3.** Dispositif pour détecter, d'une manière constante pendant une longue durée et sans grandeur parasite, des signaux de mesure d'un capteur de position angulaire, qui comporte un disque rotatif irradié par au moins une source de rayonnement et explorée optiquement selon le procédé par réflexion ou le procédé par transmission, et selon lequel

a) le disque du capteur possède au moins une piste explorée par au moins un élément de mesure (Men), notamment une photodiode,

b) au moins un élément de mesure (MER) servant à explorer une piste possédant une capacité de réflexion ou de transmission de la lumière qui, notamment, est en moyenne approximativement indépendante de la position angulaire, est en outre utilisé en tant que référence,

c) un multiplexeur (GM) détecte successivement, en un bref intervalle de temps, des signaux de mesure (MSn, MSR,MSB) au niveau d'au moins un élément de mesure (MEn), au niveau de l'élément de mesure (MER) utilisé comme référence et au niveau d'un point de liaison commun (BZ) de tous les éléments de mesure,

d) un dispositif de transmission de signaux (AKS1, ÜK, AKS2), formé notamment d'un câble de transmission (ÜK) comportant des éléments (AKS1,AKS2) d'amplification des signaux au niveau de l'entrée et de la sortie et auxquels est raccordé le multiplexeur (GM), et

e) une unité de mémorisation, de commande et de calcul (SRW) forme un signal de mesure normalisé MSn* stable pendant une longue durée et non parasité, au moyen de la relation

$$MSn^* = K1n \cdot \frac{MSn - MSB}{MSR - MSB} - K2n$$

avec

MSn = signal de mesure dans un élément de mesure,

MSR = signal de mesure de préférence lissé présent au niveau d'un élément de mesure utilisé comme référence,

MSB = signal de mesure présent au niveau du point commun de liaison de tous les éléments de mesure

K1 = facteur de normalisation de l'amplification pour l'élément de mesure respectif, et

K2 = facteur de normalisation du point zéro pour l'élément de mesure respectif.

**4.** Dispositif suivant la revendication 3, caractérisé en ce que la piste explorée par l'élément de mesure (MER) utilisé comme référence est une piste supplémentaire de référence possédant une capacité de réflexion ou de transmission de la lumière indépendante de la position angulaire.

**5.** Dispositif suivant la revendication 3 ou 4, caractérisé en ce que l'unité de mémorisation, de commande et de calcul (SRW) forme une valeur réelle (WP) de la position angulaire présente à partir des signaux de mesure (MSn*) stables en longue durée et non parasités.

FIG 1

11

**FIG 2**